# EUROPÄISCHE PATENTSCHRIFT

(11) **EP 2 189 813 B1**
(45) Veröffentlichungstag und Bekanntmachung des Hinweises auf die Patenterteilung: **28.12.2011**
(21) Anmeldenummer: 08020219.5
(22) Anmeldetag: 20.11.2008
(51) Int. Cl.: G01S 17/02, G01S 7/481

(54) **Sensorvorrichtung mit einem Distanzsensor**
Sensor device with a distance sensor
Dispositif de capteur doté d'un capteur de distance

(43) Veröffentlichungstag der Anmeldung: 26.05.2010
(73) Patentinhaber: Cedes AG, 7302 Landquart (CH)
(72) Erfinder: Bas, Albers, 7000 Chur (CH)
(74) Vertreter: Otten, Roth, Dobler & Partner

(56) Entgegenhaltungen:
- EP-A- 0 484 270
- DE-A1-102005 040 763
- US-A- 4 692 023
- US-A- 5 973 770
- US-A1- 2002 097 956
- US-A1- 2006 132 752

## Beschreibung

In vielen Anwendungen ist es erforderlich, die Distanzen zu verschiedenen Objekten zu erfassen. Sind derartige Objekte räumlich getrennt, ist für jedes Objekt ein Distanzsensor notwendig.

Aus dem US-Patent US 5,973,770 ist eine Vorrichtung zur Bestimmung des Flüssigkeitsniveaus in einem Tank bekannt, welche einen Lichtsender, eine Glasfaseroptik sowie ein Einkoppelfenster in den Tank umfasst. Der Sensor ist in der Lage, einen Abstand zu einer Flüssigkeitsoberfläche zu ermitteln, unter der Nutzung eines "rangefinders" wie er in Kameras eingesetzt wird.

Aufgabe und Vorteile der Erfindung.

Der Erfindung liegt die Aufgabe zugrunde, Distanzmesssysteme zu verbessern.

Diese Aufgabe wird durch die Merkmale des Anspruchs 1 gelöst. In den abhängigen Ansprüchen sind vorteilhafte Weiterbildungen angegeben.

Die Erfindung geht von einer Sensorvorrichtung mit einem Distanzsensor aus, der aus einer Sendeeinrichtung mit wenigstens einem Sender mit einer Lichtquelle und einer Empfangseinrichtung mit wenigstens einem Empfänger sowie einer Elektronikeinheit besteht, wobei die Elektronikeinheit dazu ausgelegt ist, mittels des Senders Licht auszusenden und eine Distanz, die vom Sender ausgesandtes Licht von einer Reflektionsfläche eines Objekts in einem Überwachungsbereich an den jeweiligen Empfänger zurücklegt, zu ermitteln. Die Distanzmessung kann z.B. durch eine Auswertung einer Laufzeit des Lichtes und/oder einer Phase einer auf das Licht aufmodulierten Schwingung erfolgen. Derartige Sensoren werden auch als "Time of Light"-Sensoren (TOF-Sensoren) bezeichnet.

Der Kern der Erfindung liegt nun darin, dass zwischen der Sendeeinrichtung und dem Überwachungsbereich und/oder zwischen dem Überwachungsbereich und der Empfangseinrichtung Lichtleitermittel zur Übertragung von Licht angeordnet sind, wobei die Lichtleitermittel das Licht zumindest einmal reflektieren, sodass das Licht von der Sendeeinrichtung zum Überwachungsbereich und/oder vom Überwachungsbereich zur Empfangseinrichtung auf einem abgewinkeltem, insbesondere mehrfach abgewinkelten Weg, so wie z.B. bei einem bekannten Lichtleiter auf Basis einer optischen Faser gelangen kann. Bei einem faseroptischen Lichtleiter kann man insbesondere nach seiner äußeren Form auch von einem gebogenen Weg sprechen. Grundsätzlich kann eine Reflexion eine Spiegelung und/oder eine Reflexion durch Totalreflexion umfassen. Zu einem Lichtleiter auf der Basis von Faseroptik findet z.B. bei einer Biegung einer Glasfaser eine vielfache Totalreflexion des Lichtsignals an der begrenzenden Außenfläche der Glasfaser statt. Es können aber auch ein oder mehrere Reflektoren oder Prismenelemente zur Anwendung kommen, um einen abgewinkelten, insbesondere mehrfach abgewinkelten Weg des Lichts zu realisieren.

Die Vorgehensweise der Lichtführung auf einem abgewinkelten Weg ist insbesondere dann von Vorteil, wenn mehrere separate Bereiche zu überwachen sind, wobei die Empfangseinrichtung ohne Lichtleitermittel nicht alle separaten Bereiche sehen kann und/oder die Sendeeinrichtung ohne Lichtleitermittel nicht alle separaten Überwachungsbereiche mit Licht bestrahlen kann. Durch die Lichtleitermittel kann dann sowohl eine Lichtrückführung als auch eine Lichtbestrahlung eines Objekts aus optisch auf direktem Wege völlig separierten Bereichen erfolgen.

Durch diese Maßnahme werden, selbst wenn ein vergleichsweise großer insbesondere räumlich unterteilter Bereich zu überwachen ist, teure Bestandteile der Sensorvorrichtung, wie z.B. ein TOF-Chip, eine Stromversorgung und/oder ein Mikrocontroller nur einmal benötigt, denn das Licht lässt sich über die Lichtleitermittel von z.B. einer zentralen Einheit aus an die jeweilige Überwachungsstelle übertragen. Von der Überwachungsstelle reflektiertes Licht kann über Lichtleitermittel an die zentrale Einheit zurückgelangen. Sofern das Licht über die Lichtleitermittel an die jeweilige Überwachungsstelle "gebracht" wird, ist die Intensität des Lichtes, die auf ein Objekt einwirkt vergleichsweise groß. Genauso ist das von einer Überwachungsstelle zurückreflektierte Licht mit wenig Verlusten behaftet, wenn es über die Lichtleitermittel an eine Empfangseinrichtung zurückgelangen kann. Normalerweise in erheblichen Umfang auftretende Streuverluste lassen sich dadurch vermeiden.

Grundsätzlich hat die erfindungsgemäße Vorgehensweise den Vorteil, dass sich der Distanzsensor nicht an der Stelle befinden muss, an welcher Messungen auszuführen sind. Damit lassen sich auch vergleichsweise kleinräumige und schlechtzugängliche Bereiche überwachen. Zum Beispiel lassen sich solche Systeme in Verkaufsautomaten einsetzen. In derartigen Verkaufsautomaten kann die Anzahl von Produkten in separaten Lagerschlitzen über eine Distanzmessung erfasst werden.

Um Informationen über Objekte an einer Überwachungsstelle zu erhalten, ist es möglich das vom Objekt, z.B. einem Produkt in einem Verkaufsautomaten zurückreflektierte Licht auf die Farbe hin auszuwerten. Licht kann in verschiedenen Frequenzen, also Farben von einer Sendeeinrichtung ausgesandt werden, um eine Farbinformation eines Objekts im Überwachungsbereich zu erhalten. Zum Beispiel wird das Objekt mit Licht einer Farbe bestrahlt und dazu das reflektierte Licht erfasst. Das gleiche erfolgt bei einer anderen Farbe. Abhängig von der zurückreflektierten Lichtintensität kann darauf geschlossen werden, welcher Farbe das Objekt zuzuordnen ist. Damit lässt sich ein Produkt identifizieren. Es ist auch denkbar, das Objekt mit weißem Licht zu bestrahlen und die reflektierten Frequenzanteile zumindest teilweise in der Empfängereinrichtung auszuwerten. Die Bestrahlung des Objekts mit unterschiedlichen Farben gleichzeitig oder sequentiell muss nicht im sichtbaren Bereich stattfinden. Es kann auch nicht sichtbares Licht verwendet werden.

Die Lichtleitermittel übertragen regelmäßig das Licht im Volumen des Lichtleiters. Z.B. lassen sich Glasfaserübertragungsmittel bzw. Glasfaserlichtleiter einsetzen.

In einer besonders bevorzugten Ausgestaltung der Erfindung umfasst der Distanzsensor nur einen Empfänger und mehrere Sender oder nur einen Sender und mehrere Empfänger.

Dadurch lässt sich eine kostengünstige Sensorvorrichtung aufbauen. Dennoch ist es möglich, verschiedene voneinander beabstandete Überwachungebereiche zu kontrollieren.

Im Weiteren ist es bevorzugt, wenn eine Kontrolleinheit vorgesehen ist, die eine unabhängige Kontrolle von Sendern und Empfängern ermöglicht.

Durch eine individuelle Kontrolle kann eine eindeutige Zuordnung zwischen Empfänger und Sender geschaffen werden. Wenn z.B. bekannt ist, welche Lichtquelle Licht ausgesendet hat, kann eine eindeutige Zuordnung zu dem überwachenden Objekt geschaffen werden, selbst wenn alle Lichtleitermittel, die Licht zu einer Empfangseinrichtung übertragen, auf lediglich einen Empfänger geführt sind.

Im Weiteren ist es bevorzugt, wenn die Lichtleitermittel derart ausgebildet sind, dass ein und dasselbe Lichtleiterelement Licht von der Sendeeinrichtung in den Überwachungsbereich und vom Überwachungsbereich zur Empfangseinrichtung überträgt. Damit kann der Aufwand für die Ausgestaltung der Lichtleitermittel reduziert werden.

Vorzugsweise werden mehrere Lichtleiter in einem Bündel, z.B. zu einem Lichtleitelement zusammengefasst.

In einer außerdem bevorzugten Ausgestaltung der Erfindung sind die Lichtleitermittel derart angeordnet, dass Licht von der Sendeeinrichtung über ein Lichtleiterelement an der Überwachungsstelle unmittelbar auf ein Lichtleiterelement trifft, dass Licht zur Empfangseinrichtung zurück transportiert. Denkbar ist auch, dass das Licht indirekt zu einem Lichtleiter geführt wird, der das Licht an die Empfangseinrichtung überträgt, z.B. über einen Reflektor. In einer weiteren vorteilhaften Ausgestaltung der Erfindung sind Lichtleiterelemente für gesandtes und empfangenes Licht zu einem Kopfteil geführt. Das kann sowohl auf der Seite des Distanzsensors oder auf der Seite des Überwachungsbereichs erfolgen. Das Kopfteil kann Linsen oder andere optische Elemente umfassen. Auf diese Weise kann eine gewünschte Ausrichtung von Sendern und Empfängern gewährleistet werden.

Das Kopfteil kann auch elektronische Komponenten beinhalten. Zum Beispiel ist ein elektronischer Verschluss, ein elektronischer Polarisator und/oder ein elektronischer Umleiter (Switcher) vorgesehen. Es ist auch denkbar, dass ein Sender und/oder Empfänger zumindest teilweise in einem Lichtleiterkopfteil platziert ist. Ein Kopfteil kann eine Antireflektionsschicht, ein Pofilter und/oder eine Verzögerungsschicht umfassen.

Damit kann eine sichere Lichtführung gewährleistet werden.

In einer darüber hinaus gehend vorteilhaften Ausgestaltung der Erfindung sind Lenkmittel vorgesehen, sodass die Ausrichtung von gesandtem und empfangenem Licht in einem Kopfteil deutlich unterschiedlich und/oder einstellbar ist. Regelmäßig lassen sich Lichtleiter nicht stark biegen. Das bedeutet, dass bei einem Lichtleiter, der in einem Kopfelement in einer Richtung ankommt, die nicht die bevorzugte Richtung ist, vergleichsweise viel Raum notwendig ist, um die Richtung von austretendem Licht in die gewünschte Richtung zu überführen. Daher können optische Komponenten im Kopfteil vorgesehen werden, um sicherzustellen, dass Licht in der gewünschten Richtung ein und/oder austritt.

Optische Einheiten können genutzt werden, um das Licht in einen Lichtleiter einzukoppeln. Ebenso denkbar ist die Verwendung derartiger Systeme an einer Lichtaustrittsstelle eines Lichtleiters, bzw. auf einem Weg des Lichtes von der Austrittstelle zu einem überwachendem Objekt. Solche Optikelemente können wenigstens teilweise Licht bündeln oder aufweiten, sodass das Licht genau den Überwachungsbereich ausleuchtet, der zu überwachen ist.

Durch optische Zusatzelemente kann z.B. mehr Licht in einen Lichtleiter eingeleitet werden, wodurch ein Signalrauschverhältnis sich verbessern lässt. Durch eine exakte Bestrahlung lediglich der Fläche, die auch überwacht werden soll, lässt sich die Genauigkeit einer Messung erhöhen.

Vorzugsweise ist ein Übergang von Lichtleitermitteln in ein Kopfelement derart ausgestaltet, dass das Licht keine optische Bruchstelle wahrnimmt. Dazu kann das Kopfteil z.B. mit den Lichtleitermitteln verklebt oder verschweißt werden oder das Kopfteil mit den Lichtleitermitteln wird aus einem Stück gefertigt.

Auf diese Weise lässt sich Licht von einem Sender besser in die Lichtleitermittel einkoppeln. Außerdem können störende Reflektionen, wenn das Licht in die Lichtleitermittel eintritt oder austritt vermieden werden. Der "optische Wirkungsgrad" des Systems wird dadurch verbessert.

Grundsätzlich können die Lichtleitermittel so ausgestaltet werden, dass sie in der gewünschten Länge abnehmbar sind, um dann an einen Sensor oder ein Kopfteil angekoppelt zu werden.

Damit lassen sich kundenspezifische Lösungen leichter realisieren.

Darüber hinaus kann vorgesehen werden, dass Koppelmittel zur Verfügung stehen, um Lichtleitermittel miteinander zu koppeln. Durch diese Maßnahme kann ein sehr großer Distanzbereich zwischen einer Sendeeinrichtung und einem zu überwachendem Bereich abgedeckt werden.

Ggf. kann eine Kopplung nur durch zusammenstecken oder aufschnappen erfolgen, was den gesamten Vorgang der Abstimmung der Länge der Lichtleitermittel weiter vereinfacht.

In einer weiteren bevorzugten Ausgestaltung der Erfindung ist die Vorrichtung ausgelegt, Maßnahmen zu treffen, wenn die Lichtintensität von empfangenem Licht oder die gemessene Distanz eine vorgegebene Schwelle unterschreitet bzw. eine vorgegebene Schwelle überschreitet.

Zusätzlich ist es bevorzugt, wenn die vorgegebene Schwelle einstellbar ist bzw. die Vorrichtung selbst eine Anpassung eines Schwellwerts vornimmt.

Eine solche Ausgestaltung ist besonders dann bevorzugt, wenn ein Kunde die Länge der Lichtleitermittel nach Wunsch verändern kann. Wird die Länge z.B. eines faseroptischen Lichtleiters verändert, verändert sich die Messdistanz für das Licht und damit auch das Dämpfungsverhalten der Lichtstrecke. Ein Schwellwert sollte auf diese geänderten Umstände angepasst werden können. Vorzugsweise ist das System selbst in der Lage die Länge der Lichtleitermittel und/oder die davon abhängigen Parameter zu erfassen. In einer bevorzugten Ausgestaltung erzeugt die erfindungsgemäße Vorrichtung hierzu ein Protokoll.

Durch diese Maßnahmen wird die Benutzung der Sensorvorrichtung sicherer und einfacher.

Zur Bestimmung der Länge des Lichtleiters werden z.B. verschiedene Modulationsfrequenzen oder Grundfrequenzen des Lichtes verwendet.

Dies hat den Hintergrund, dass ein Lichtleiter sich für unterschiedliche Frequenzen des Lichtes unterschiedlich verhält, woraus sich die absolute Länge des Lichtleiters bestimmen lässt.

Es können Lichtleiter unterschiedlicher Ausgestaltung zum Einsatz kommen. Zum Beispiel Einmodenlichtleiter und Vielmodenlichtleiter. In Einmodenlichtleiter werden Einmodenfasern eingesetzt. Bei diesen gibt es nur einen möglichen Lichtweg. Es treten daher bei einer gegebenen Frequenz keine Laufzeitunterschiede auf, was für die schnelle Datenübertragung und eine genaue Distanzmessung von Vorteil ist.

In Vielmodenlichtleitern wird das Licht unter verschiedenen Winkeln reflektiert, was zu Laufzeitunterschieden einzelner Lichtanteile führen kann. Durch gezielt verwendete Moden des Lichts im Vergleich kann daraus die Länge des Lichtleiters berechnet werden. Im Weiteren ist es bevorzugt, wenn ein Lichtleiter, der Licht zum Überwachungsbereich führt, im Kopfteil unmittelbar in einen Lichtleiter für reflektiertes Licht eingekoppelt wird. Auf diese Weise kann die Länge der Lichtleiter einfach bestimmt werden.

Sofern Vielmodenlichtleiter zur Anwendung kommen, ist es bevorzugt, die gemessene Distanz im Hinblick auf die unterschiedlichen Wege, die das Licht innerhalb des Lichtleiters zurückführen kann, zu korrigieren. Dazu kann z.B. eine Referenzmessung durchgeführt werden, um die effektive Länge des Lichtleiters zu bestimmen, die der Sensor bzw. die Objektoberfläche sieht. Eine solche Referenzmessung kann bei der Installation eines solchen Systems oder während der Herstellung vorgenommen werden. Vielmodenlichtleiter sind zwar kostenintensiver, machen es jedoch leichter, Licht in den Lichtleiter einzukoppeln.

Vorzugsweise werden optische Fasern mit einem Kerndurchmesser von < 50 µm, insbesondere < 20 µm, z.B. auch < 10 µm eingesetzt. Dadurch entstehen weniger Moden im Lichtleiter.

Im Weiteren ist es bevorzugt, wenn der Lichtleiter einen über den Querschnitt verlaufenden variablen Brechungsindex aufweist, insbesondere wenn der Brechungsindex nach außen kleiner wird. Dies ist insbesondere im Zusammenhang mit Vielmodenlichtleitern von Interesse, da durch diese Maßnahme Laufzeitunterschiede zwischen wenig reflektiertem Licht im Lichtleiter und Licht, das vielfach mit entsprechend längerem Weg reflektiert wurde, verkleinert werden. Dies beruht auf dem Prinzip, dass im optisch weniger dichten Medium Licht eine höhere Geschwindigkeit besitzt. Ist der Brechungsindex nach außen hin kleiner, läuft Licht durch diese Bereiche schneller, was insbesondere dem am äußeren Bereich mehrfach reflektierten Licht zugute kommt, das dadurch auf einem längeren Weg läuft.

Außerdem bevorzugt ist es, wenn der Lichtleiter, insbesondere eine Lichtleiterfaser auf die zu benutzende Frequenz hin optimiert ist.

Auch auf diese Weise lassen sich Laufzeitunterschiede verschiedener Moden im Lichtleiter möglichst klein halten.

In einer überdies bevorzugten Ausgestaltung der Erfindung ist das Ende eines Lichtleiters mit Mikrolinsen versehen.

Damit lässt sich die Kopplung z.B. einer optischen Faser eines Lichtleiters zu einem Sensor verbessern. Als Linsen können z.B. Fresnelinsen oder Gradientenindexmikrolinsen zur Anwendung kommen.

Außerdem bevorzugt ist es, wenn die Lichtquelle einen vergleichsweise kleinen Strahlungswinkel besitzt. Zum Beispiel werden Burrusdioden oder Dioden mit einem insbesondere kleinen Strahlungswinkel eingesetzt. Ebenfalls denkbar sind Laser oder vcsel, vecsel-Bauelemente.

Außerdem möglich ist eine Verkleinerung einer Bandbreite durch den Einsatz von entsprechenden Filtern, z.B. einem Bandpassfilter.

Grundsätzlich sind LEDs als Lichtquelle vergleichsweise kostengünstig, haben jedoch einen großen Abstrahlkegel, was die Einkopplung in eine optische Faser schwieriger macht. Hingegen sind Laser teuer, haben aber paralleles Licht, was sich leicht in einen Lichtleiter, insbesondere eine optische Faser einkoppeln lässt.

Grundsätzlich lassen sich Referenzmessungen durchführen, um durch den Lichtleiter, z.B. eine optische Faser hervorgerufene Fehler zu korrigieren.

Prinzipiell lassen sich Platinen in optischen Sensoren z.B. über Löten, insbesondere Bügellöten oder Heißversiegeln, befestigen, um nur zwei Beispiele zu nennen. Platinen können integrierte Lichtführungsmittel und/oder optische Schichten besitzen.

Beispielsweise lässt sich mit einem erfindungsgemäßen System die Anwesenheit oder Abwesenheit von Personen überwachen, z.B. in einem Bett. Dabei erweist sich das erfindungsgemäße Systeme insbesondere dann von Vorteil, wenn z.B. mehrere Betten mit einem Sensor zu überwachen sind oder mehrere Felder in einem Bett über einen Sensor überwacht werden sollen.

### Zeichnungen:

Mehrere Ausführungsbeispiele sind in den Zeichnungen dargestellt und unter Angabe weiterer Vorteile und Einzelheiten näher erläutert. Es zeigen
- Figur 1: in einer schematischen Seitenansicht einen stark vereinfachten Teil eines aus dem Stand der Technik bekannten Verkaufsautomaten in Kombination mit einer Sensorvorrichtung,
- Figur 2: den in Figur 1 stark schematisierten Teil eines Verkaufsautomaten mit einer erfindungsgemäßen Sensorvorrichtung,
- Figur 3: in einer schematisierten räumlichen Darstellung eine in einem Aufzug angeordnete erfindungsgemäße Sensorvorrichtung und
- Figur 4: ein Sicherungssystem für eine Tür auf der Grundlage einer erfindungsgemäßen Sensorvorrichtung schematisiert dargestellt.

### Beschreibung der Ausführungsbeispiele:

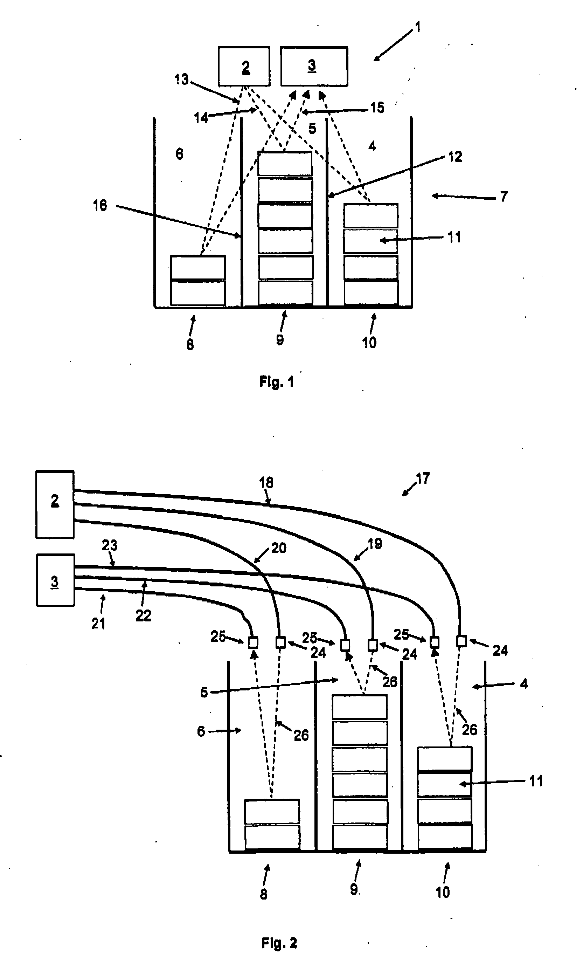

In Figur 1 ist der Fall gezeigt, in welchem versucht wird, mit einem Distanzsensor 1 bestehend aus einer Lichtquelle 2 und einer Empfangseinrichtung 3, drei voneinander getrennte Produktlagerschlitze 4, 5, 6 eines Verkaufsautomaten 7 zu überwachen.

In den Produktlagerschlitzen 4, 5, 6 sind Stapel 8, 9, 10 von Produkten 11 angeordnet. Mit der Lichtquelle 2 kann zwar der Produktlagerschlitz 5, 6 über Lichtstrahlen 13, 14 erreicht werden, durch eine Zwischenwand 12 zwischen dem Produktlagerschlitz 4 und 5 jedoch nicht der Produktstapel 10. zusätzlich kann die Empfangseinrichtung lediglich reflektiertes Licht 15 vom Produktstapel 9 dedektieren, wogegen Licht vom Produktstapel 8 durch eine Zwischenwand 16 zwischen dem Produktlagerschlitz 6 und dem Produktlagerschlitz 5 die Empfangseinrichtung 3 nicht erreichen kann. Vom Produktstapel 10 gelangt kein Licht zur Empfangseinrichtung 3, da das Licht von der Lichtquelle 2 durch die Zwischenwand 12 blockiert ist.

Im Ergebnis kann daher lediglich die Distanz zum Produktstapel 9 ermittelt werden. Um eine sichere Messung im Hinblick auf alle Produktstapel vornehmen zu können, wird eine erfindungsgemäße Sensorvorrichtung 17 gemäß Figur 2 eingesetzt.

Die Sensorvorrichtung 17 besteht ebenfalls aus einer Lichtquelle 2 und einer Empfangseinrichtung 3.

Zu jedem Produktstapelschlitz 4, 5, 6 ist jeweils ein Lichtleiter 18, 19, 20 von der Lichtquelle 2 und jeweils ein Lichtleiter 21, 22, 23 zurück zur Empfangseinrichtung 3 geführt.

Somit wird über die Lichtleiter 18, 19, 20 von der Lichtquelle 2 das Licht genau zu einem solchen Bereich geleitet, nämlich die Produktlagerschlitze 4, 5, 6, die über überwacht werden sollen. In gleicher Weise wird ein Überwachungslichtstrahl, der von einem Produktstapel 8, 9, 10 zurückreflektiert wird, von den Lichtleitern 21, 22, 23 aufgenommen und zur Empfangseinrichtung 3 geführt.

Um eine gewünschte Bestrahlung eines Produktstapels 8, 9, 10 mit der Lichtquelle 2 zu erreichen, kann der jeweilige Lichtleiter 18, 19, 20 mit einem Lichtleiterkopf 24 ausgestattet sein. Genauso kann für ein optimiertes Einleiten von reflektiertem Licht 25 vom jeweiligen Produktstapel 8, 9, 10 in die Lichtleiter 21, 22, 23 ein Lichtleiterkopf 25 vorgesehen werden.

Die Distanzbestimmung zum obersten Produkt 11 eines jeweiligen Produktstapels 8, 9, 10 kann z.B. über die Laufzeit des Lichtes von der Lichtquelle 2 zum Empfänger 3 oder durch eine Auswertung einer Phase einer auf das von der Lichtquelle 3 stammende Licht aufmodulierten Schwingung erfolgen.

Um Rückschlüsse über die jeweilige Höhe eines Stapels, und damit über den Befüllzustand des jeweiligen Produktlagerschlitzes 4, 5, 6 zu erhalten, müssen die unterschiedlichen Lichtleiterlängen der Lichtleiter 18 bis 23 berücksichtigt werden.

Durch die Lichtleiter 18 bis 23 kann eine Überwachung von räumlich getrennten Überwachungsbereichen gemäß der Produktstapelschlitze 4, 5, 6 mit nur einer Empfangseinrichtung und nur einer Lichtquelle realisiert werden.

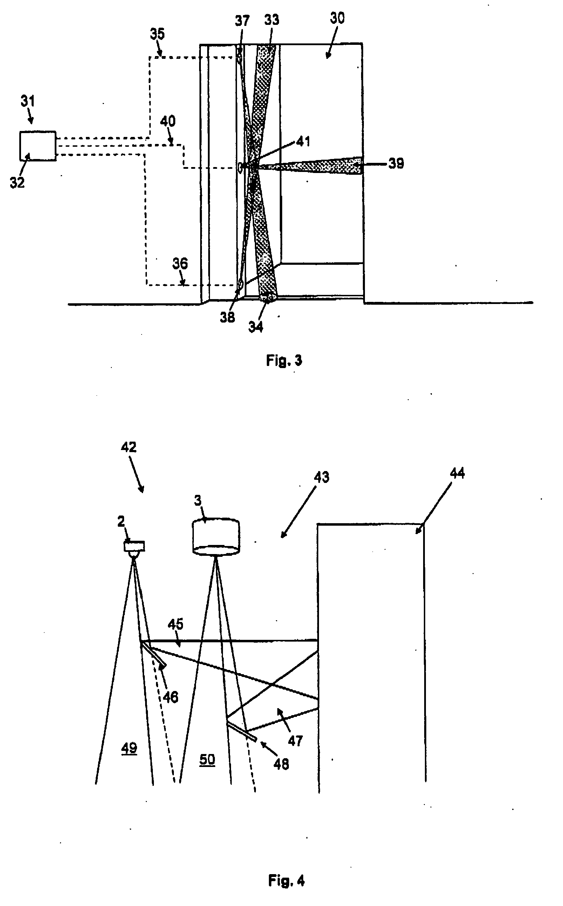

In Figur 3 ist eine Türöffnung 30 abgebildet, die von einer Sensorvorrichtung 31, welche einen Distanzsensor 32 umfasst, überwacht wird. Zunächst wird die Toröffnung 30 von 2 Lichtstrahlen 33, 34 überwacht. Die Lichtstrahlen stammen von der Sensoreinrichtung 31, indem Licht über Lichtleiter 35, 36 jeweils zu einem Lichtleiterkopf 37, 38 geführt wird, aus dem die Lichtstrahlen 33, 34 dann in der gewünschten Richtung austreten. Hierzu umfasst der jeweilige Lichtleiterkopf ggf. eine zusätzliche Optik. Zusätzlich kann wie in Figur 3 dargestellt ein dritter Lichtstrahl 39 zur Überwachung der Distanz zwischen einem Türrahmen genutzt werden.

Das Licht wird vorzugsweise über einen Lichtleiter 40 zu einem Lichtleiterkopf 41 vom Distanzsensor 32 kommend, geführt und tritt als Lichtstrahl 39 in der gewünschten Richtung aus.

Die zwei Lichtstrahlen 33, 34 bzw. Lichtkegel 33, 34 können zu deren Unterscheidung beispielsweise im Zeit-Multiplex betrieben werden oder unterschiedliche Modulationsfrequenzen nutzen.

Wenn die Forderkante einer Tür sich im Türrahmen dem Überwachungsbereich annähert würde diese an sich als Objekt detektiert. Um dies zu verhindern, können beide Lichtstrahlen 33, 34 miteinander verglichen werden. Wenn beide Lichtstrahlen die gleiche Distanz messen, ist es die Tür, ansonsten ein Objekt, aufgrund dessen ggf. eine Sicherheitsmaßnahme zu treffen ist. Diese kann darin bestehen, ein sofortiges Öffnen der Tür einzuleiten.

Mit dem zusätzlichen Lichtstrahl 39 der ggf. ebenso wie die Lichtstrahlen 33, 34 im Multiplex oder mit unterschiedlicher Modulationsfrequenz zu diesen Lichtstrahlen betrieben wird, kann eine erhöhte Sicherheit bei der Überwachung der Türöffnung 30 erreicht werden. Sobald mit den Lichtstrahlen eine sprunghafte Distanzänderung gemessen wird, und darüber hinaus die Distanz, die die Lichtstrahlen 33, 34 messen unterschiedlich ist, lässt sich dadurch auf ein Objekt in der Türöffnung 30 schließen. Daraufhin können vorgegebene Maßnahmen eingeleitet werden, wird z.B. wie bereits oben erwähnt, die sofortige Öffnung der Tür.

Aus Figur 4 ist eine Sensorvorrichtung 42 zu entnehmen, die für die Überwachung einer Türöffnung 43 mit einer Tür 44 vorgesehen ist.

Die Tür 44 ist z.B. eine Schiebetür, die sich in einer Ebene senkrecht zur Zeichenebene bewegt.

Die Sensorvorrichtung 42 besitzt eine Lichtquelle 2 und eine Empfangseinrichtung 3. Die Lichtquelle leuchtet in einem Bereich 49 geradewegs nach unten. Ebenso schaut die Sensorvorrichtung 3 in einem Bereich 50 nach unten, um die Toröffnung zu überwachen. Ein Teil des ausgesandten Lichts 45 der Lichtquelle 2 wird über ein Spiegelelement 46 in Richtung Tür 44 umgelenkt. Sofern der Lichtstrahl 45 auf die Tür trifft, wird dieses als reflektiertes Licht 47 zu einem Spiegelelement 48 reflektiert, das das Licht in die Empfangseinrichtung 3 einspiegelt.

Auf diese Weise kann mit einem Sensor sowohl eine Türöffnung, als auch die Bewegung der dazugehörigen Tür überwacht werden.

Die Reflexion an den Spiegelelementen 46 und 48 kann durch Spiegelung und/oder durch Totalreflexion erfolgen.

### Bezugszeichenliste:

- 1: Distanzsensor
- 2: Lichtquelle
- 3: Empfangseinrichtung
- 4: Produktlagerschlitz
- 5: Produktlagerschlitz
- 6: Produktlagerschütz
- 7: Verkaufsautomat
- 8: Stapel
- 9: Stapel
- 10: Stapel
- 11: Produkt
- 12: Zwischenwand
- 13: Lichtstrahl
- 14: Lichtstrahl
- 15: Licht
- 16: Zwischenwand
- 17: Sensorvorrichtung
- 18: Lichtleiter
- 19: Lichtleiter
- 20: Lichtleiter
- 21: Lichtleiter
- 22: Lichtleiter
- 23: Lichtleiter
- 24: Lichtleiterkopf
- 25: Lichtleiterkopf
- 26: Licht
- 30: Türöffnung
- 31: Sensorvorrichtung
- 32: Distanzsensor
- 33: Lichtstrahl
- 34: Lichtstrahl
- 35: Lichtleiter
- 36: Lichtleiter
- 37: Lichtleiterkopf
- 38: Lichtleiterkopf
- 39: Lichtstrahl
- 40: Lichtleiter
- 41: Lichtkopf
- 42: Sensorvorrichtung
- 43: Türöffnung
- 44: Tür
- 45: ausgesandtes Licht
- 46: Spiegelelement
- 47: reflektiertes Licht
- 48: Spiegelelement
- 49: Bereich
- 50: Bereich

## Patentansprüche

1. Sensorvorrichtung (17, 31) mit einem Distanzsensor (1, 32) bestehend aus einer Sendeeinrichtung (2) mit wenigstens einem Sender mit einer Lichtquelle und einer Empfangseinrichtung (3) mit wenigstens einem Empfänger sowie einer Elektronikeinheit, wobei die Elektronikeinheit dazu ausgelegt ist, mittels des Senders Licht auszusenden und eine Distanz, die vom Sender ausgesandtes Licht von einer Reflektionsfläche eines Objekts in einem Überwachungsbereich an den jeweiligen Empfängern zurücklegt, zu ermitteln, auf der Basis einer Auswertung der Laufzeit des Lichtes und/oder einer Phase einer auf das Licht aufmodulierten Schwingung, **dadurch gekennzeichnet, dass** zwischen mehreren räumlich getrennten, optisch separaten Überwachungsbereichen und der Empfangseinrichtung (3) mehrere Lichtleizermittel (21 bis 23; 35, 36, 40) zur Übertragung von Licht angeordnet sind, wobei die Lichtleitermittel das Licht zumindest einfach reflektieren, sodass Licht von den Überwachungsbereichen zur Empfangseinrichtung (3) auf einem abgewinkelten weg gelangen kann, und wobei eine Auswertung der mehreren Lichtleitermitteln mit nur einer Empfangseinrichtung in Form eines ICF-Sensors realisiert ist.

2. Vorrichtung nach Anspruch 1, **dadurch gekennzeichnet, dass** zwischen der Sendeeinrichtung (2) und mehreren räumlich getrennten, optisch separaten Überwachungsbereichen mehrere Lichtleitermittel (18 bis 20; 35; 36; 40) zur Übertragung von Licht angeordnet sind, wobei die Lichtleitmittel das Licht zumindest einfach reflektieren, sodass Licht von der Sendeeinrichtung (2) zu den Überwachurgsbereichen auf einem abgewinkelten Weg gelangen kann.

3. Vorrichtung nach einem der vorhergehenden Ansprüche, **dadurch gekennzeichnet, dass** die Lichtleitermittel eine TIR (Total Internal Reflection)-Linse umfassen.

4. Vorrichtung nach einem der vorhergehenden Ansprüche, **dadurch gekennzeichnet, dass** eine Kontrolleinheit für die unabhängige Kontrolle von Sendern und Empfängern vorgesehen ist.

5. Vorrichtung nach einem der vorhergehenden Ansprüche, **dadurch gekennzeichnet, dass** die Lichtleitermittel (18 bis 23; 35, 36, 40) derart ausgebildet sind, dass das selbe Lichtleiterelement Licht von der Sendeeinrichtung (2) in den Überwachungsbereich und vom Überwachungsbereich zur Empfangseinrichtung (3) überträgt.

6. Vorrichtung nach einem der vorhergehenden Ansprüche, **dadurch gekennzeichnet, dass** die Lichtleitermittel derart angeordnet sind, dass Licht von der Sendeeinrichtung (2) über ein Lichtleiterelement an der Überwachungsstelle unmittelbar auf ein Lichtleiterelement trifft, das Licht zur Empfangseinrichtung (3) zurück transportiert.

7. Vorrichtung nach einem der vorhergehenden Ansprüche, **dadurch gekennzeichnet, dass** Lichtleiterelemente für gesandtes und empfangenes Licht zu einem Kopfteil (24, 25, 37, 38, 41) geführt sind.

8. Vorrichtung nach einem der vorhergehenden Ansprüche, **dadurch** gekenntzeichnet, dass das Kopfteil (24, 25, 37, 38, 41) elektronische Komponenten umfasst.

9. Vorrichtung nach einem der vorhergehenden Ansprüche, **dadurch gekennzeichnet, dass** Lenkmittel vorgesehen sind, sodass die Ausrichtung von gesandtem und empfangenem Licht in einem Kopfteil deutlich unterschiedlich ist.

10. Vorrichtung nach einem der vorhergehenden Ansprüche, **dadurch gekennzeichnet, dass** die Vorrichtung ausgelegt ist, Maßnahmen zu treffen, wenn die Lichtintensität von empfangenem Licht und/oder die gemessene Distanz eine vorgegebene Schwelle unterschreitet bzw. eine vorgegebene Schwelle überschreitet.

11. Vorrichtung nach einem der vorhergehenden Ansprüche, **dadurch gekennzeichnet, dass** die Vorrichtung in der Lage ist, die Länge von Lichtleitermitteln (18 bis 23; 35, 36, 40) selbsttätig zu bestimmen.

## Claims

1. Sensor device (17, 31) comprising a distance sensor (1, 32) consisting of a transmission device (2) comprising at least one transmitter with a light source and a receiving device (3) comprising at least one receiver, as well as an electronic unit, wherein the electronic unit is set up to emit light by means of the transmitter and to determine a distance which light emitted by the transmitter covers from a reflection surface of an object in an monitoring area to the respective receiver, on the basis of an evaluation of the running time of the light and/or a phase of an oscillation modulated onto the light, **characterised in that** between several spatially separated, optically separate monitoring areas and the receiving device (3) several light conducting means (21 to 23; 35, 36, 40) are arranged for transmitting light, wherein the light conducting means reflects the light at least once, so that light can pass from the monitoring areas to the receiving device (3) on an angled path, and wherein an evaluation of the several light conducting means is performed with only one receiving unit in the form of a TOF sensor.

2. Device according to claim 1, **characterised in that** between the transmission device (2) and several spatially divided, optically separate monitoring areas several light conducting means (18 to 20; 35; 36; 40) are arranged for the transmission of light, wherein the light conducting means reflect the light at least once, so that light can pass from the transmission device (2) to the monitoring areas on an angled path.

3. Device according to one of the preceding claims, **characterised in that** the light conducting means comprises a TIR (Total Internal Reflection) lens.

4. Device according to one of the preceding claims, **characterised in that** a control unit is provided for the Independent control of transmitters and receivers.

5. Device according to one of the preceding claims, **characterised in that** the light conducting means (18 to 23; 35, 36, 40) are designed such that the same light conducting element transmits light from the transmission device (2) into the monitoring area and from the monitoring area to the receiving device (3).

6. Device according to one of the preceding claims, **characterised in that** the light conducting means are arranged such that light from the transmission device (2) via a light conducting element at the monitoring point directly hits a light conducting element, which transports light back to the receiving device (3).

7. Device according to one of the preceding claims, **characterised in that** the light conducting elements for transmitted and received light are guided to a head part (24, 25, 37, 38, 41).

8. Device according to one of the preceding claims, **characterised in that** the head part (24, 25, 37, 38, 41) comprises electronic components.

9. Device according to one of the preceding claims, **characterised in that** steering means are provided, so that the orientation of transmitted and received light in a head part is clearly different.

10. Device according to one of the preceding claims, **characterised in that** the device is set up to take measures if the light intensity of received light and/or the measured distance falls below a predefined threshold or exceeds a predefined threshold.

11. Device according to one of the preceding claims, **characterised in that** the device is in a position to determine the length of light conducting means (18 to 23; 35, 36, 40) automatically.

## Revendications

1. Dispositif de capteur (17, 31) comportant un capteur de distance (1, 32) formé d'une installation d'émission (2) avec un au moins un émetteur et une source lumineuse ainsi qu'une installation de réception (3) avec au moins un récepteur et une unité électronique,
* l'unité électronique étant conçue pour émettre de la lumière avec l'émetteur et déterminer la distance parcourue par la lumière émise par l'émetteur et réfléchie par une surface réfléchissante d'un objet dans une zone de surveillance en retour vers le récepteur respectif, en se fondant sur l'exploitation du temps de parcours de la lumière et/ou de la phase d'une oscillation modulant la lumière,
dispositif **caractérisé en ce que**
plusieurs guides de lumière (21-23 ; 35, 36, 40) sont prévus entre plusieurs zones de surveillance séparées dans l'espace et séparées optiquement et l'installation de réception (3) pour transmettre la lumière,
* les guides de lumière réfléchissant au moins simplement la lumière pour que la lumière des zones de surveillance arrive à l'installation de réception (3) sur un chemin dévié, et
* l'exploitation des différents guides de lumière est réalisée seulement avec une installation de réception sous la forme d'un capteur TOF (capteur temps de vol).

2. Dispositif selon la revendication 1,
**caractérisé en ce que**
plusieurs guides de lumière (18-20 ; 35, 36, 40) sont prévus entre l'installation d'émission (2) et plusieurs zones de surveillance séparées optiquement, distinctes dans l'espace, pour transmettre la lumière,
* les guides de lumière réfléchissant au moins simplement la lumière pour que la lumière puisse arriver de l'installation d'émission (2) aux zones de surveillance par un chemin détourné.

3. Dispositif selon l'une des revendications précédentes,
**caractérisé en ce que**
le guide de lumière est une lentille TIR (lentille à réflexion interne totale).

4. Dispositif selon l'une des revendications précédentes,
**caractérisé par**
une unité de contrôle pour contrôler indépendamment les émetteurs et les récepteurs.

5. Dispositif selon l'une des revendications précédentes,
**caractérisé en ce que**
les guides de lumière (18-23 ; 35, 36, 40) sont réalisés pour que le même élément guide de lumière transmette la lumière de l'installation d'émission (2) à la zone de surveillance et de la zone de surveillance à l'installation de réception (3).

6. Dispositif selon l'une des revendications précédentes,
**caractérisé en ce que**
les guides de lumière sont installés pour que la lumière de l'installation d'émission (2) arrive par un élément guide de lumière sur un élément guide de lumière directement sur la zone de surveillance pour renvoyer la lumière vers l'installation de réception (3).

7. Dispositif selon l'une des revendications précédentes,
**caractérisé en ce que**
les éléments guides de lumière, sont guidés vers une pièce de tête (24, 25, 37, 38, 41) pour la lumière émise à la lumière reçue.

8. Dispositif selon l'une des revendications précédentes,
**caractérisé en ce que**
la pièce de tête (24, 25, 37, 38, 41) comporte des composants électroniques.

9. Dispositif selon l'une des revendications précédentes,
**caractérisé par**
des moyens de guidage pour que la direction de la lumière émise et celle de la lumière reçue soient nettement différentes dans une pièce de tête.

10. Dispositif selon l'une des revendications précédentes,
**caractérisé en ce que**
le dispositif est conçu pour intervenir si l'intensité lumineuse de la lumière reçue et/ou la distance mesurée, sont inférieures à un seuil donné ou dépassent un seuil donné.

11. Dispositif selon l'une des revendications précédentes,
**caractérisé en ce que**
le dispositif détermine de lui-même la longueur des guides de lumière (18-23 ; 35, 36, 40).
